# DEMANDE DE BREVET EUROPEEN

(11) **EP 1 260 931 A1**
(43) Date de publication de la demande: **27.11.2002**
(21) Numéro de dépôt: 02291239.8
(22) Date de dépôt: 17.05.2002
(51) Int. Cl.: G06K 7/00

(54) **Module électronique connectable sur un port d'ordinateur**

(30) Priorité: 25.05.2001 FR 0106898
(71) Demandeur: Xiring, 92310 Sèvres (FR)
(72) Inventeur: Choiset, Bruno, 78640 Villiers-St-Frédéric (FR); Briane, Alain, 75009 Paris (FR)
(74) Mandataire: Debay, Yves

(57) **Abrégé**

La présente invention concerne un module électronique connectable sur un port (2) d'un ordinateur (3). Ce module se caractérise en ce qu'il comprend une première partie d'accouplement (10) électrique à un port (2) d'un ordinateur (3), cette première partie (10) étant électriquement connectée à une deuxième partie comprenant un module de traitement (7) de données ou un module de connexion (14) à un module de traitement (4) de données, ces deux parties étant réparties dans au moins deux éléments (15, 16) monoblocs contigus d'un boîtier reliés par au moins une liaison (6) flexible, cette liaison (6) flexible étant située à proximité de la première partie de connexion (10) au port (2) de l'ordinateur (3).

## Description

La présente invention concerne un module électronique connectable sur un port d'un ordinateur. L'invention concerne plus particulièrement un lecteur portatif pour micromodule comportant un circuit intégré.

Il est connu par le brevet WO 00/70533 un lecteur portatif de modules au format mini-carte pour une connexion à un port d'un ordinateur personnel. Selon cet art antérieur, ce lecteur est monobloc et comprend un ensemble de connexion à un port d'un ordinateur. Cet ensemble de connexion comprend des lignes conductrices, et une partie de traitement de données. La partie de traitement comprend une zone d'insertion d'un micromodule de carte à puce apte à mémoriser des informations confidentielles. Cette zone d'insertion comprend un connecteur à contact dont les pattes de contact sont électriquement connectées aux lignes conductrices de l'ensemble de connexion et aux plots de contact du micromodule lorsque celui-ci est inséré dans la zone d'insertion. Ce type de lecteur portatif est destiné à être inséré sur un port d'un ordinateur personnel, tel qu'un port USB. Un tel lecteur permet de gérer facilement et de manière sécurisée des données, par exemple confidentielles, car elles seront mémorisées sur le micromodule inséré dans le lecteur et non sur l'ordinateur lui-même ou sur un serveur externe. Les données mémorisées sur le micromodule pourront donc être utilisées de manière sécurisée dans un système informatique sans risque d'accès frauduleux.

Selon cet art antérieur, le lecteur est monobloc et sensiblement parallélépipédique. Ainsi lorsque ce lecteur est branché sur le port de l'ordinateur, il va dépasser d'une certaine longueur. Lors de déplacements de l'ordinateur, en particulier lorsqu'il s'agit d'un ordinateur portable, le lecteur est susceptible d'être soumis à des chocs ou des efforts dans plusieurs directions différentes. Ces efforts exercés sur le lecteur engendreront également des torsions du connecteur de port sur lequel le lecteur est branché. Ces torsions sur le connecteur du port sont susceptibles d'endommager la carte de l'ordinateur sur laquelle est situé le port. En particulier, le port USB est situé sur la carte mère de l'ordinateur et les efforts exercés sur le lecteur peuvent endommager ainsi la carte mère. Or l'endommagement de la carte mère peut s'avérer rédhibitoire pour tout l'ordinateur.

La présente invention a donc pour objet de pallier les inconvénients de l'art antérieur en proposant un module électronique directement connectable sur un port d'un ordinateur n'endommageant ni le port sur lequel il est connecté et par conséquent ni la carte comprenant le port sur lequel un tel module est connecté.

Ce but est atteint par un module électronique connectable sur un port d'un ordinateur, caractérisé en ce qu'il comprend une première partie d'accouplement électrique à un port d'un ordinateur, cette première partie étant électriquement connectée à une deuxième partie comprenant un module de traitement de données ou un module de connexion à un module de traitement de données, ces deux parties étant réparties dans au moins deux éléments monoblocs contigus d'un boîtier reliés par au moins une liaison flexible, cette liaison flexible étant située à proximité de la première partie de connexion au port de l'ordinateur.

Selon une autre particularité, le module de traitement de données est relié à un moyen de communication optique pour communiquer sans fil avec un dispositif extérieur.

Selon une autre particularité, le module de traitement de données est relié à un moyen de communication radioélectrique pour communiquer sans fil avec un dispositif extérieur.

Selon une autre particularité, la deuxième partie comprend une partie d'insertion d'un module de traitement de données amovible, pouvant mémoriser des informations confidentielles et comprenant pour l'échange des données avec le module, des moyens de connexion, à contact, constitués de plots de contact ou sans contact ou les deux, le module de connexion de la deuxième partie du module étant à contact pour venir en contact avec les plots de contact du module de traitement amovible lorsque celui-ci est inséré dans la partie d'insertion ou sans contact pour échanger les données avec les moyens de connexion sans contact du module de traitement amovible lorsque celui-ci est inséré dans la partie d'insertion.

Selon une autre particularité, la deuxième partie comprend une partie d'insertion d'un module de traitement de données amovible pouvant mémoriser des informations confidentielles et comprenant des plots de contact, le module de connexion étant constitué d'un dispositif de connexion comprenant une pluralité de pattes électriquement connectées à la première partie de connexion électrique et aux plots de contact du module de traitement de données amovible.

Selon une autre particularité, la première partie de connexion électrique comprend au moins trois lignes conductrices d'électricité, électriquement connectées au module de connexion de la deuxième partie.

Selon une autre particularité, la première partie de connexion électrique comprend au moins trois lignes conductrices d'électricité, électriquement connectées au module de traitement de données de la deuxième partie.

Selon une autre particularité, la première partie est insérée dans un élément monobloc et la deuxième partie dans l'autre élément monobloc.

Selon une autre particularité, la connexion électrique établie entre les deux parties est constituée d'un ensemble de fils traversant la liaison flexible.

Selon une autre particularité, la liaison flexible est constituée d'au moins un élément solidaire des deux éléments monoblocs constitués d'un matériau souple.

Selon une autre particularité, la liaison flexible est constituée d'au moins une charnière ou d'au moins un cardan.

Selon une autre particularité, le module de traitement amovible est constitué d'un micromodule d'une carte à puce regroupant le module de traitement de données.

Selon une autre particularité, la première partie de connexion électrique se connecte sur un port USB d'un ordinateur et comporte quatre lignes conductrices.

Selon une autre particularité, le module comprend entre le module de traitement ou le module de connexion à un module de traitement, un module de conversion de protocole.

L'invention, avec ses caractéristiques et avantages, ressortira plus clairement à la lecture de la description faite en référence aux dessins annexés dans lesquels :
la figure 1 représente le module électronique selon l'invention ainsi que le micromodule destiné à être inséré dans le module selon l'invention,
la figure 2 représente, en vue de côté, le module électronique selon l'invention représenté en figure 1,
la figure 3 représente une première variante de réalisation du module électronique selon l'invention,
la figure 4 représente une deuxième variante du module selon l'invention,
la figure 5 représente schématiquement le connecteur du module électronique connecté à la partie de connexion du module sur le port de l'ordinateur,
les figures 6a et 6b représentent, respectivement en coupe transversale et longitudinale un port USB d'un ordinateur,
la figure 7 représente, en perspective, la partie de connexion du module électronique selon l'invention pouvant être branchée sur un port USB.

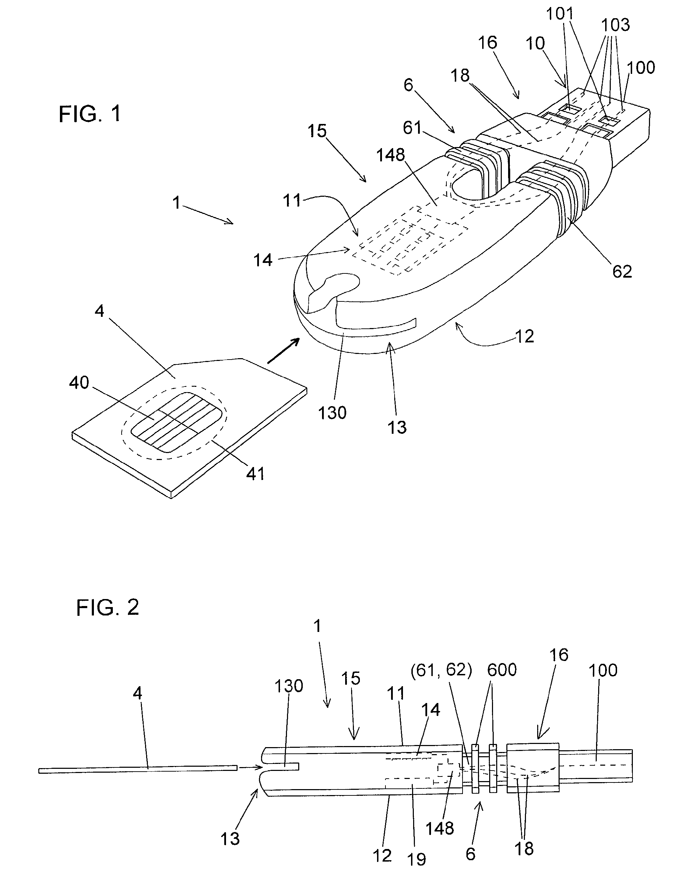

L'invention va à présent être décrite en liaison avec les figures 1 à 7.

Un module électronique (1) constituant, par exemple, un lecteur sera, par exemple, constitué d'un boîtier de petite taille ayant, par exemple, une forme profilée allongée suivant un axe dit longitudinal et aplatie sur deux faces opposées, une première dite supérieure (11) et une seconde dite inférieure (12), comme représenté en figures 1 à 4.

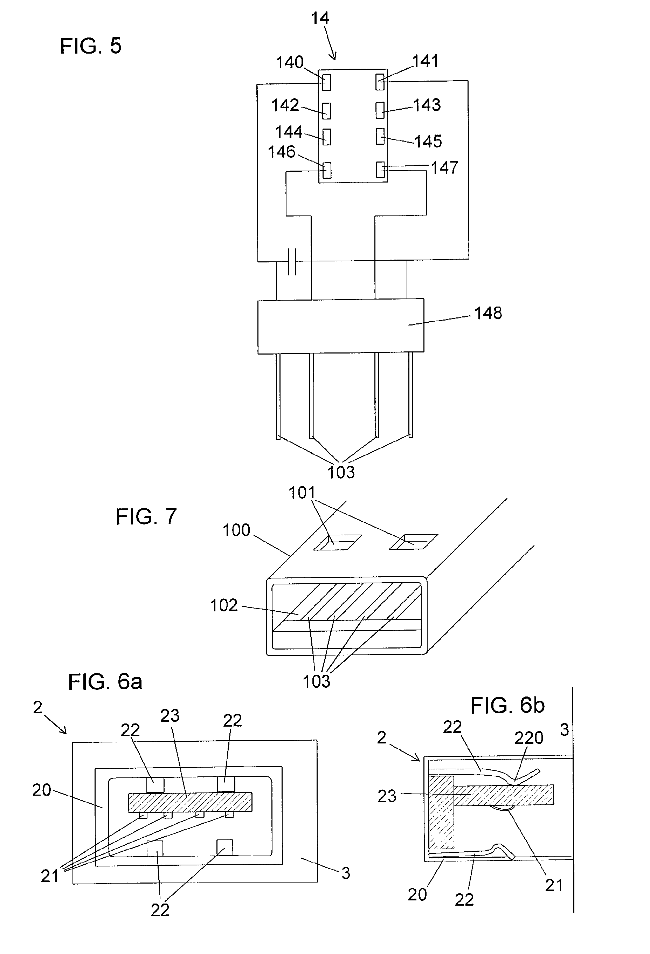

Le lecteur (1) portatif selon l'invention comprend, comme représenté sur les figures 1 à 4, une partie de connexion (10) destinée à être insérée dans un port d'un ordinateur, tel que, par exemple, un ordinateur portable. Le port de cet ordinateur sera, par exemple, un port (2) USB ("Universal Serial Bus") représenté en figures 6a et 6b. Un port (2) USB, de manière connue, comprend, comme représenté aux figures 6a et 6b, un embout (20) de section transversale rectangulaire, par exemple, en plastique, en général encastré dans le boîtier de l'unité centrale de l'ordinateur (3). Ce port (2) comprendra de manière standard un élément (23) de connexion en saillie dans l'embout (20), quatre pattes (21) de connexion avec la partie de connexion (10) du lecteur (1) qui y est insérée et, par exemple, deux lames (22) souples parallèles ayant une de leurs extrémités fixée sur une face interne de l'embout (20). Chaque lame (22) est courbée à proximité de son extrémité libre. Cette courbure (220) est en appui contre l'élément (23) de connexion en saillie dans l'embout lorsque rien n'est inséré dans le port (2). Lorsque la partie de connexion (10) du lecteur (1) est complètement insérée dans le port (2), chaque courbure (220) de chaque lame vient s'insérer dans un logement (101) formé sur une surface en vis-à-vis, de la partie de connexion (10), de manière à bloquer la partie de connexion (10) du lecteur dans le port (2).

Une partie de connexion (10) compatible avec un port USB sera donc constituée d'une fiche solidaire du boîtier du lecteur par une liaison rigide et destinée à être insérée dans le port (2). Cette fiche (100) sera de section transversale rectangulaire légèrement inférieure à la section transversale du port (2), de manière à pouvoir y être insérée. La fiche (100) sera ouverte à son extrémité destinée à être introduite dans le port (2). La fiche (100) comprendra une connectique adaptée pour s'accoupler à la connectique du port (2) dans lequel la fiche est introduite. La connectique de la fiche (100) est constituée d'un élément (102) de support constituant une surface sur laquelle affleure une pluralité de lignes (103) conductrices d'électricité parallèles entre elles et à l'axe longitudinal de la fiche (100). Ces lignes (103) conductrices, par exemple au nombre de quatre, sont disposées sur l'élément (102) de support de manière à pouvoir être connectées, chacune, avec une patte (21) de connexion du port (2) USB lorsque la partie de connexion est insérée dans celui-ci. Comme déjà décrit, la fiche comprendra sur sa surface en vis-à-vis des lames (22) souples du port USB lorsque la partie de connexion (10) est insérée dans le port (2), des logements, par exemple deux logements (101), dans chacun desquels vient s'insérer la courbure (220) d'une lame (22) souple du port (2) USB.

Le lecteur (1) selon l'invention comprendra également une partie de traitement de données.

Les données à transférer vers l'ordinateur lorsque le lecteur est connecté sur le port (2) de l'ordinateur (3), pourront être mémorisées selon une première variante de la partie de traitement, comme, selon l'art antérieur, dans une puce (40) à circuit intégré d'une carte à puce amovible et insérable dans le lecteur (1) ou, selon une deuxième variante, mémorisées directement dans une mémoire intégrée dans la partie de traitement du lecteur (1).

Selon la première variante représentée en figures 1 à 3, les données sont mémorisées dans une puce (40) à circuit intégré d'une carte à puce. Un micromodule (4), de manière connue, peut être détaché de la carte à puce pour être inséré dans un lecteur. Ce principe est utilisé, par exemple, dans le domaine de la téléphonie mobile. Un micromodule (4) comportant une puce (40) à circuit intégré est représenté en figure 1. De manière connue, une puce (40) à circuit intégré comprend des mémoires RAM, ROM et EEPROM et un microprocesseur gérant le transfert des données. La puce (40) comprend également une pluralité de plots de contact. En particulier, de manière connue, suivant la norme ISO7816, la puce (40) comprendra un plot de contact dénommé Vcc et utilisé pour l'alimentation en tension de la puce, un plot de contact dénommé GND et utilisé pour la mise à la masse de la puce. La puce (40) pourra comprendre également selon les protocoles prévus par les normes ISO7816, par exemple, un plot dénommé CLK et utilisé pour l'entrée d'un signal d'horloge, un plot dénommé I/O pour l'entrée et la sortie des données, un plot dénommé Vpp et utilisé pour l'alimentation de la puce en tension de programmation et un plot dénommé RST utilisé pour la remise à zéro. Dans la norme USB, la puce comprend un plot Vcc, un plot GND et deux plots de contact dénommés D+ et D- utilisé pour la transmission des données, ces plots étant deux des plots réservés pour usages ultérieurs de la norme ISO7816.

Le lecteur selon l'invention comprend une partie d'insertion (13) dans laquelle est destiné à être inséré le micromodule (4). Cette partie d'insertion (13) sera, par exemple, formée d'une fente (130) réalisée sur le boîtier du lecteur, par exemple, dans un plan longitudinal et parallèle aux faces supérieure (11) et inférieure (12) du lecteur (1) selon l'invention. Le micromodule (4) sera alors inséré suivant sa tranche dans la fente (130) formée sur le lecteur (1).

Un dispositif de connexion (14) est placé à l'intérieur de la partie d'insertion (13). Ce dispositif de connexion (14) comprend une pluralité d'éléments conducteurs et élastiques dénommés pattes (140 à 147) métalliques. Sur la figure 5, le connecteur comprend huit pattes (140 à 147) positionnées suivant deux rangées de quatre pattes. Sur la figure 5, quatre pattes (140, 141, 146, 147) sont chacune électriquement connectées à une ligne (103) conductrice de la partie de connexion (10). Les quatre autres pattes (142, 143, 144, 145) peuvent être connectées, par exemple, à un élément (148) de conversion de protocole ISO/USB dans le cas où la puce à circuit intégré est conforme à la norme ISO78 et le port est conforme à la norme USB. Chacune de ces pattes (140 à 147) est destinée à être connectée électriquement avec un plot de contact de la puce (40) à circuit intégré du micromodule (4) lorsque celui-ci est inséré dans la partie d'insertion (13) du lecteur (1).

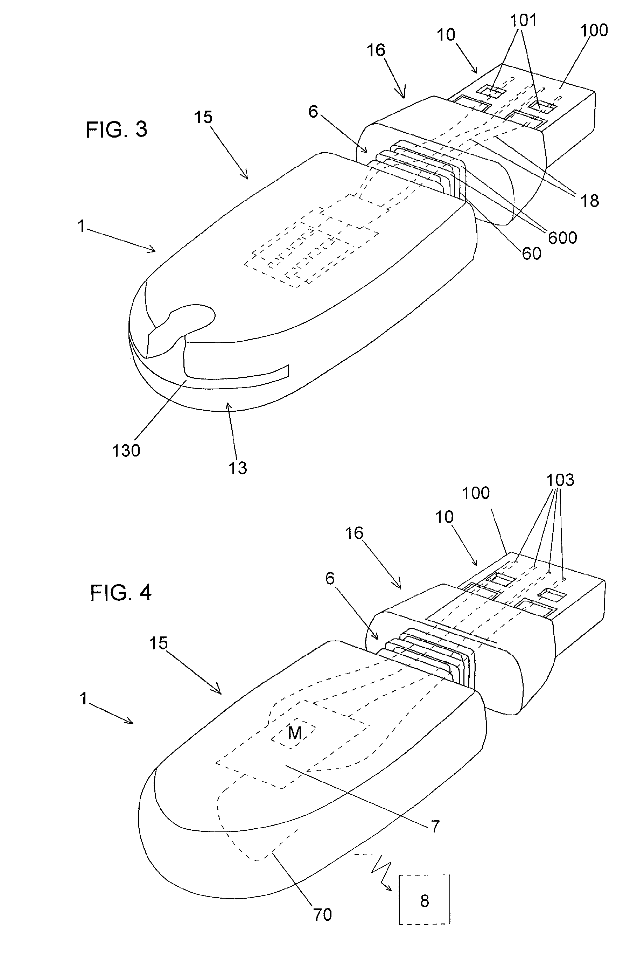

Selon la deuxième variante, les données sont mémorisées dans un circuit électronique (7) intégré au lecteur (1) comportant au moins une mémoire (M) intégrée au lecteur (1). Cette mémoire (M) est donc inamovible par rapport au lecteur (1). Cette mémoire, comme la puce (40) du micromodule (4), pourra être programmée pour y insérer les données souhaitées, par exemple des informations d'authentification du titulaire du module, des mots de passe ou d'autres programmes d'application. Selon cette variante représentée en figure 4, le lecteur (1) selon l'invention présente donc la particularité de ne disposer d'aucune partie d'insertion (13) d'un micromodule (4).

Selon cette deuxième variante, le circuit électronique (7) pourra être relié à un moyen de communication pour communiquer sans fil avec un dispositif extérieur (8). Ce moyen de communication pourra être optique ou radioélectrique. Dans le cas où le moyen de communication est radio électrique, il pourra être du type "blue tooth" et constitué d'une antenne (70).

Selon l'invention, le boîtier du lecteur (1) sera, par exemple, constitué de deux éléments (15, 16) rigides reliés par au moins une liaison flexible. La fiche (100) de la partie de connexion est solidaire par une liaison rigide au premier élément (16). Le deuxième élément (15) comprend la partie de traitement des données et soit la partie d'insertion dans le cas où les données sont stockées sur une puce (40) à circuit intégré d'un micromodule (4), soit le circuit électronique (7) intégré au lecteur (1) et comportant au moins une mémoire (M).

Selon l'invention, le lecteur (1) comprendra au moins une liaison (6) flexible située à proximité de la partie de connexion. Ainsi placée, la liaison (6) flexible permet des débattements de toute la partie du lecteur (1) faisant saillie vers l'extérieur de l'ordinateur (3). De cette manière, le port (2) supportant le lecteur (1) selon l'invention ne sera pas endommagé et la carte mère de l'ordinateur (3) non plus. Les dimensions et/ou le matériau constituant cette liaison flexible sont étudiés pour que l'effort de flexion maximum de la liaison (6) flexible soit inférieur à l'effort nécessaire pour endommager la connectique du port (2) et de la partie de connexion (10) du lecteur (1). La position de la liaison flexible (6) par rapport à la partie de connexion (10) sera définie par la taille du premier élément (14). Dans le cas où le premier élément (14) n'existe pas, la liaison (6) flexible pourra, par exemple, venir en contact avec le boîtier d'encastrement du port (2) de l'ordinateur (3) lorsque le lecteur (1) selon l'invention est branché sur ce port (2). Cette liaison (6) flexible selon l'invention sera présente quel que soit le type de traitement de données utilisé, c'est-à-dire à carte à puce insérable ou à circuit électronique (7) intégré.

Cette liaison (6) flexible pourra, par exemple, être une liaison rotule matérialisée par exemple par un élément (60) parallélépipédique réalisé dans un matériau souple, tel que par exemple un matériau plastique, reliant les deux éléments (15, 16) du lecteur (1) comme représenté en figures 3 et 4. Cet élément (60) comprendra, par exemple, un soufflet (600). La partie de connexion (10) comprise dans le premier élément (16) et la partie de traitement comprise dans le deuxième élément (15) sont reliées, par exemple, par un ensemble de fils (18) souples. Ces fils (18) traversent l'élément (60) souple et la souplesse des fils (18) autorise les débattements du lecteur (1) selon l'invention et en particulier, du deuxième élément (15) par rapport au premier élément (16).

Selon une autre variante représentée en figures 1 et 2, la liaison flexible (6) selon l'invention est constituée de deux éléments (61, 62) en forme de soufflet conférant une souplesse à ces éléments (61, 62). Ces deux éléments (61, 62) joignent, par exemple, les deux éléments (15, 16) du lecteur (1), le premier élément (16) du lecteur solidaire de la partie de connexion (10) et le deuxième élément (15) du lecteur comprenant la partie de traitement et la partie d'insertion (13). Cette liaison (6) à deux éléments (61, 62) parallèles n'est pas limitée à la variante à micromodule (4) insérable représentée en figure 1. Il sera possible de disposer une liaison (6) à deux éléments (61, 62) parallèles pour des lecteurs (1) à partie de traitement de données intégrée comme représenté en figure 4. Comme précédemment, la partie de connexion (10) et la partie de traitement pourront être électriquement connectées, par exemple, par des fils souples. Selon cette variante, les fils souples pourront être répartis dans les deux éléments (61, 62) parallèles.

Selon l'invention, la liaison (6) flexible pourra être constituée d'au moins une charnière. Dans ce cas, le débattement d'une partie du lecteur (1) ne sera autorisé que suivant une seule direction.

Selon l'invention, la liaison (6) flexible pourra être constituée d'au moins un cardan.

Selon une variante, la partie d'insertion (13) du lecteur (1) comprend un mode de transmission ou de réception de données à contact constitué par le connecteur (14) avec la puce (40) à circuit intégré et un mode de transmission ou de réception de données sans contact. Ce mode de transmission ou de réception de données sans contact peut même se substituer complètement au connecteur (14). La transmission ou la réception de données entre la puce (40) à circuit intégré et le moyen sans contact du lecteur (1) sera, par exemple, réalisée par ondes. Dans ce cas, la puce (40) à circuit intégré du micromodule (4) comprendra un moyen de transmission ou de réception des informations constitué, par exemple, d'une antenne (41) intégrée au micromodule (4), comme représenté en figure 1. Dans le lecteur (1), la transmission vers la puce (40) à circuit intégré ou la réception de données provenant de l'antenne (41) intégrée à la puce (40) à circuit intégré, sera également réalisée à l'aide d'une antenne (19), par exemple, positionnée juste sous la puce (40) du micromodule (4) lorsque celui-ci est inséré complètement dans le lecteur (1), comme représenté en figure 2.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

En particulier, le schéma du câblage de la figure 5 est purement illustratif et tout autre câblage est envisageable. Notamment l'invention n'est pas limitée à son utilisation à un port USB et tout autre câblage compatible avec une norme de port pourra être substitué sans s'écarter de l'invention.

## Revendications

1. Module électronique portatif connectable sur un port (2) d'un ordinateur (3), le port (2) étant situé à proximité de la périphérie de l'ordinateur (3), **caractérisé en ce qu'**il comprend une première partie d'accouplement (10) électrique à un port (2) d'un ordinateur (3), cette première partie (10) étant électriquement connectée à une deuxième partie comprenant un module de traitement (7) de données ou un module de connexion (14) à un module de traitement (4) de données, ces deux parties étant réparties dans au moins deux éléments (15, 16) monoblocs contigus d'un boîtier reliés par au moins une liaison (6) flexible, cette liaison (6) flexible étant située à proximité de la première partie de connexion (10) au port (2) de l'ordinateur (3).

2. Module selon la revendication 1, **caractérisé en ce que** le module de traitement (7) de données est relié à un moyen de communication optique pour communiquer sans fil avec un dispositif (8) extérieur.

3. Module selon la revendication 1, **caractérisé en ce que** le module de traitement (7) de données est relié à un moyen de communication (70) radioélectrique pour communiquer sans fil avec un dispositif (8) extérieur.

4. Module selon la revendication 1, **caractérisé en ce que** la deuxième partie comprend une partie d'insertion (13) d'un module (4) de traitement de données amovible, pouvant mémoriser des informations confidentielles et comprenant pour l'échange des données avec le module, des moyens de connexion, à contact, constitués de plots de contact ou sans contact ou les deux, le module de connexion de la deuxième partie du module étant à contact pour venir en contact avec les plots de contact du module (4) de traitement amovible lorsque celui-ci est inséré dans la partie d'insertion (13) ou sans contact pour échanger les données avec les moyens de connexion sans contact du module de traitement amovible lorsque celui-ci est inséré dans la partie d'insertion (13).

5. Module selon la revendication 1, **caractérisé en ce que** la deuxième partie comprend une partie d'insertion (13) d'un module de traitement de données amovible pouvant mémoriser des informations confidentielles et comprenant des plots de contact, le module de connexion étant constitué d'un dispositif de connexion (14) comprenant une pluralité de pattes (140 à 147) électriquement connectées à la première partie de connexion (10) électrique et aux plots de contact du module (4) de traitement de données amovible.

6. Module selon l'une des revendications 1, 4 ou 5, **caractérisé en ce que** la première partie de connexion (10) électrique comprend au moins trois lignes (103) conductrices d'électricité, électriquement connectées au module de connexion de la deuxième partie.

7. Module selon l'une des revendications 1 à 3, **caractérisé en ce que** la première partie de connexion (10) électrique comprend au moins trois lignes (103) conductrices d'électricité, électriquement connectées au module de traitement de données de la deuxième partie.

8. Module selon l'une des revendications 1 à 7, **caractérisé en ce que** la première partie est insérée dans un élément (16) monobloc et la deuxième partie dans l'autre élément (15) monobloc.

9. Module selon la revendication 8, **caractérisé en ce que** la connexion électrique établie entre les deux parties est constituée d'un ensemble de fils (18) traversant la liaison (6) flexible.

10. Module selon l'une des revendications 1 à 9, **caractérisé en ce que** la liaison flexible (6) est constituée d'au moins un élément solidaire des deux éléments monoblocs constitués d'un matériau souple.

11. Module selon l'une des revendications 1 à 10, **caractérisé en ce que** la liaison (6) flexible est constituée d'au moins une charnière ou d'au moins un cardan.

12. Module selon l'une des revendications 1 à 11, **caractérisé en ce que** le module de traitement amovible est constitué d'un micromodule (4) d'une carte à puce (40) regroupant le module de traitement de données.

13. Module selon l'une des revendications 1 à 12, **caractérisé en ce que** la première partie de connexion (10) électrique se connecte sur un port (2) USB d'un ordinateur (3) et comporte quatre lignes conductrices (103).

14. Module selon l'une des revendications 1 à 13, **caractérisé en ce qu'**il comprend entre le module de traitement ou le module de connexion à un module de traitement, et la première partie de connexion (10), un module (148) de conversion de protocole.
